# EUROPEAN PATENT APPLICATION

(11) **EP 2 407 986 A1**
(43) Date of publication of application: **18.01.2012**
(21) Application number: 11169330.5
(22) Date of filing: 09.06.2011
(51) Int. Cl.: H01G 9/20

(54) **Photoelectric conversion module and method of manufacturing the same**

(30) Priority: 16.07.2010 KR 20100069174
(71) Applicant: Samsung SDI Co., Ltd., Yongin-si, Gyeonggi-do (KR)
(72) Inventor: Park, Jung-Tae, YONGIN-SI, Gyeonggi-do (KR); Song, Jung-Suk, YONGIN-SI, Gyeonggi-do (KR); Yang, Nam-Choul, YONGIN-SI, Gyeonggi-do (KR)
(74) Representative: Salou, Clarisse

(57) **Abstract**

A photoelectric conversion module includes a substrate (201); a transparent conductive layer (202) on the substrate (201); a plurality of first scribe lines (204) formed on the substrate by scribing the transparent conductive layer (202) so as to divide the transparent conductive layer into a plurality of unit photoelectric cells (203); and a plurality of second scribe lines (207) formed along edges of the substrate (201) by scribing the transparent conductive layer (202) so as to electrically insulate the unit photoelectric cells (203) from one another along the edges of the substrate.

## Description

### CROSS-REFERENCE TO RELATED APPLICATION

This application claims priority to and the benefit of Korean Patent Application No. 10-2010-0069174, filed on July 16, 2010, in the Korean Intellectual Property Office, the disclosure of which is incorporated herein in its entirety by reference.

### BACKGROUND

### 1. Field

Embodiments of the present invention relate to a photoelectric conversion module.

### 2. Description of Related Art

Recently, research has been conducted on photoelectric conversion modules, which convert light into electric energy as an alternative to using fossil fuels, and solar cells using solar light have attracted much attention.

Research on solar cells having various driving principles has been conducted, and wafer-type silicon or crystalline solar cells including p-n semiconductor junctions are generally used. However, costs of manufacturing wafer-type silicon or crystalline solar cells can be high due to the use of high purity semiconductor materials.

Unlike silicon solar cells, dye-sensitized solar cells (DSSCs) include a photosensitive dye that receives light having a wavelength of visible light and generates excited electrons, a semiconductor material for receiving the excited electrons, and an electrolyte reacting with electrons from an external circuit. The DSSCs have a much higher photoelectric conversion efficiency than conventional silicon solar cells and thus are regarded as next-generation solar cells.

However, when a large-area photoelectric conversion module is manufactured, a transparent conductive layer may be formed not only on an upper surface of a substrate as desired, but also on side surfaces of said substrate. After forming the transparent conductive layer, a scribing process may be performed to remove a part of the transparent conductive layer in order to divide the large-sized photoelectric conversion module into a plurality of unit photoelectric cells. However, after the scribing process is performed, the transparent conductive layer formed on the side surfaces of the substrate may still connect the unit photoelectric cells to one another, and thus a short circuit may occur between adjacent unit photoelectric cells, thereby failing to completely separate (or divide) the unit photoelectric cells from one another.

### SUMMARY

According to embodiments of the present invention, during manufacturing of a large-area photoelectric conversion module, a scribe line is formed along an edge of the substrate to prevent a short circuit from occurring between adjacent unit photoelectric cells by transparent conductive layers being connected to one another through side surfaces of the substrate. A method of manufacturing the photoelectric conversion module is also provided.

Additional aspects will be set forth in part in the description which follows.

According to an embodiment of the present invention, a photoelectric conversion module includes a substrate; a transparent conductive layer on the substrate; a plurality of first scribe lines formed on the substrate by scribing the transparent conductive layer so as to divide the transparent conductive layer into a plurality of unit photoelectric cells; and a plurality of second scribe lines formed along edges of the substrate by scribing the transparent conductive layer. Advantageously, these second scribe lines of the invention electrically insulate the unit photoelectric cells from one another along the edges of the substrate.

The first scribe lines may extend in a first direction on the substrate from one side of the substrate to another side of the substrate opposite the one side of the substrate.
The term "side" means an external area of the parallelogram substantially formed by the substrate. It usually excludes here the two largest areas, while it includes the four surface areas formed along the thickness of the substrate.

The first scribe lines may correspond to a location where a part of the transparent conductive layer is removed. Advantageously, these second scribe lines of the invention so that the unit photoelectric cells are electrically insulated from one another at a surface of the substrate in a second direction perpendicular to the first direction on the substrate.

The second scribe lines may correspond to a location where a part of the transparent conductive layer is removed. Advantageously, these second scribe lines of the invention electrically insulate the unit photoelectric cells from one another along the edges of the substrate.
The term "edge" generally means the parts of the substrate which are along the sharp sides of the substrate, near the sides of this substrate.

The second scribe lines may include first portions (or lines) extending in a first direction along the edges of the substrate between two opposite sides of the substrate, and second portions (or lines) extending in a second direction along the edges of the substrate between two opposite sides of the substrate, the second direction being perpendicular to the first direction.

Advantageously, according to the invention, the unit photoelectric cells are electrically insulated from one another along a surface of the substrate by the first and second scribe lines.

The transparent conductive layer may include a transparent conductive oxide (TCO) layer.

According to an embodiment of the present invention, a photoelectric conversion module includes a light-receiving substrate having a plurality of photoelectrodes, each of the photoelectrodes comprising a first transparent conductive layer and a semiconductor layer on the first transparent conductive layer able to face a counter substrate; a counter substrate facing the light-receiving substrate and having a plurality of counter electrodes, each of the counter electrodes comprising a second transparent conductive layer and a catalyst layer on the second transparent conductive layer able to face the semi-conductor layer; electrolyte layers between the photoelectrodes and the counter electrodes; a sealant between the light-receiving substrate and the counter substrate and separating at least one unit photoelectric cell from an adjacent unit photoelectric cell; a plurality of first scribe lines formed on the light-receiving substrate and the counter substrate by scribing each of the first transparent conductive layer and the second transparent conductive layer so as to divide said transparent conductive layer into a plurality of unit photoelectric cells; and a plurality of second scribe lines formed along edges of the substrates by scribing each of the first transparent conductive layer and the second transparent conductive layer. Advantageously, the first scribe lines electrically insulate the adjacent unit photoelectric cells from one another at a surface of each of the substrates. Advantageously, the second scribe lines electrically insulate the unit photoelectric cells from one another along the edges of the substrates.

The first scribe lines may extend in a first direction on the substrates from one side of each of the substrates to another side of each of the substrates opposite the one side of each of the substrates.

The first scribe lines may correspond to a location where a part of the first transparent conductive layer and a part of the second transparent conductive layer are removed so that the unit photoelectric cells are electrically insulated from one another at a surface of the substrates in a second direction perpendicular to the first direction on the substrates.

The second scribe lines may correspond to a location where a part of the first transparent conductive layer and a part of the second transparent conductive layer are removed so as to electrically insulate the unit photoelectric cells from one another along the edges of the substrates.

The second scribe lines may include first portions extending in a first direction along the edges of the substrates between two opposite sides of the substrates, and second portions extending in a second direction along the edges of the substrates between two opposite sides of the substrates, the second direction being perpendicular to the first direction.

The first transparent conductive layer and the second transparent conductive layer may each include a TCO layer.

The semiconductor layer may include a metal oxide, and a photosensitive dye may be absorbed in the semiconductor layer.

The catalyst layer may include a material selected from the group consisting of a metal, a metal oxide, and a carbon (C)-based material.
Preferably, the semiconductor layer may include a metal oxide, a photosensitive dye may be absorbed in the semiconductor layer, and the catalyst layer may include a material selected from the group consisting of a metal, a metal oxide, and a carbon (C)-based material.

According to an embodiment of the present invention, a method of manufacturing a substrate module of a photoelectric conversion module includes forming a transparent conductive layer on a substrate; forming a plurality of first scribe lines on the substrate by scribing the transparent conductive layer so as to divide the transparent conductive layer into a plurality of unit photoelectric cells; and forming a plurality of second scribe lines along edges of the substrate by scribing the transparent conductive layer. Advantageously, these second scribe lines electrically insulate the unit photoelectric cells from one another along the edges of the substrate.

Preferably, the forming of the first scribe lines includes scribing the transparent conductive layer from one side of the substrate to another side of the substrate opposite the one side of the substrate.

The forming of the second scribe lines include scribing the transparent conductive layer in a first direction along the edges of the substrate between two opposite sides of the substrate; and scribing the transparent conductive layer in a second direction along the edges of the substrate between two opposite sides of the substrate, the second direction being perpendicular to the first direction.

### BRIEF DESCRIPTION OF THE DRAWINGS

These and/or other aspects will become apparent and more readily appreciated from the following description of the embodiments, taken in conjunction with the accompanying drawings, of which:

FIG. 1 is a cross-sectional view illustrating a photoelectric conversion module in which a plurality of unit photoelectric cells are arranged, according to an embodiment of the present invention;

FIG. 2 is a perspective view illustrating a substrate module of the photoelectric conversion module of FIG. 1, and in particular the unit photoelectric cells of FIG. 1 divided by a plurality of scribe lines; and

FIGS. 3A through 3D are plane views for sequentially describing a process for forming the unit photoelectric cells of FIG. 1 on a substrate, according to an embodiment of the present invention, wherein FIG. 3A illustrates the substrate after a transparent conductive layer is formed, FIG. 3B illustrates the substrate of FIG. 3A after first scribe lines are formed thereon, FIG. 3C illustrates the substrate of FIG. 3B after second scribe lines are formed thereon, and FIG. 3D illustrates the substrate of FIG. 3C after functional layers are formed thereon.

### DETAILED DESCRIPTION

Reference will now be made in detail to embodiments, examples of which are illustrated in the accompanying drawings.

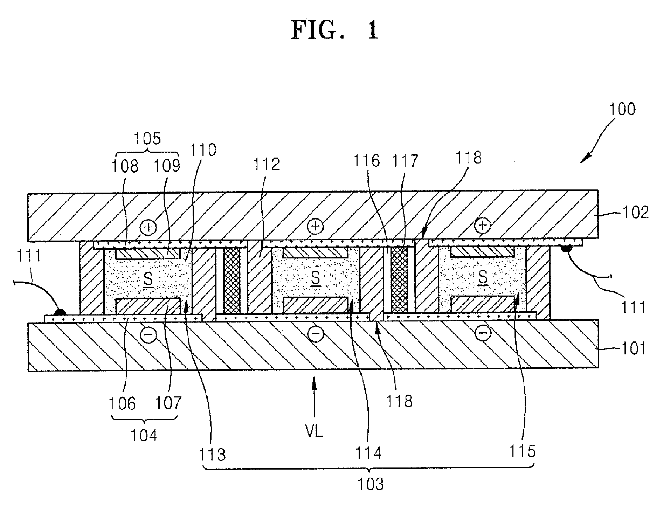

FIG. 1 illustrates a photoelectric conversion module 100 according to an embodiment of the present invention.

Referring to FIG. 1, the photoelectric conversion module 100 includes a light-receiving substrate 101 and a counter substrate 102 that face each other.

The light-receiving substrate 101 may be formed of a transparent material. For example, the light-receiving substrate 101 may be formed of a material having a high light transmittance. For example, the light-receiving substrate 101 may be configured as a glass substrate or a resin film. Since resin films have flexibility, a resin film may be suitable for uses requiring flexibility.

The counter substrate 102 is not necessarily transparent. However, the counter substrate 102 may be formed of a transparent material, and more particularly, may be formed of the same material as the light-receiving substrate 101. In this case, light VL (visible light) may be received from both sides, and thus, a photoelectric conversion efficiency of the photoelectric conversion module 100 may be improved.

In particular, when the photoelectric conversion module 100 is used for a building integrated photovoltaic system (BIPV) installed in a structure, e.g., a window frame, both sides of the photoelectric conversion module 100 may have transparency so as not to block the light VL from entering indoors.

A plurality of unit photoelectric cells 103 are formed between the light-receiving substrate 101 and the counter substrate 102. Each of the unit photoelectric cells 103 includes a photoelectrode 104 for performing photoelectric conversion and a counter electrode 105.

The photoelectrode 104 includes a first transparent conductive layer 106 and a semiconductor layer 107. The counter electrode 105 includes a second transparent conductive layer 108 and a catalyst layer 109. An electrolyte layer 110 is formed between the photoelectrode 104 and the counter electrode 105 and lies in particular between the semiconductor layer 107 and the catalyst layer 109. The first transparent conductive layers 106 and the second transparent conductive layers 108 may be connected in series or in parallel by using a lead 111. In the embodiment illustrated in FIG. 1, the first transparent conductive layers 106 and the second transparent conductive layers 108 are connected to one another in series.

The first transparent conductive layers 106 are formed on an inner surface of the light-receiving substrate 101. The first transparent conductive layer 106 may be formed of a material having transparency and electrical conductivity. For example, the first transparent conductive layer 106 may be formed of a transparent conductive oxide (TCO) layer such as an indium tin oxide (ITO) layer, a fluorine-doped tin oxide (FTO) layer, or an antimony-doped tin oxide (ATO) layer.

A first grid pattern (not shown) may further be formed on the first transparent conductive layer 106. The first grid pattern may be formed to reduce an electrical resistance of the first transparent conductive layer 106. The first grid pattern may function as a wiring for collecting electrons generated due to photoelectric conversion and may provide a low resistance current path. For example, the first grid pattern may be formed of a metal having excellent electrical conductivity such as gold (Au), silver (Ag), or aluminum (Al). The first grid pattern may be patterned in a solid fashion having a certain shape, such as a quadrilateral shape, or a mesh fashion having an aperture (e.g., a predetermined aperture), but the present invention is not limited thereto.

When the first grid pattern is formed, a first protection layer may further be formed to cover the first grid pattern. The first protection layer prevents electrode damage by, for example, preventing the first grid pattern from contacting and reacting with the electrolyte layer 110 and thus preventing the first grid pattern from being corroded. The first protection layer may be formed of a material that does not react with the electrolyte layer 110. For example, the first protection layer may be formed of a curable resin material.

The photoelectrode 104 functions as a negative electrode of the photoelectric conversion module 100 and may have a high aperture ratio. Light VL that is incident on the semiconductor layer 107 through the first transparent conductive layer 106 functions as an excitation source of a photosensitive dye absorbed in the semiconductor layer 107. Accordingly, a photoelectric conversion efficiency of the photoelectric conversion module 100 may be improved by increasing an amount of the incident light VL.

The semiconductor layer 107 may be formed of a semiconductor material, for example, a metallic oxide including metals such as cadmium (Cd), zinc (Zn), indium (In), lead (Pb), molybdenum (Mo), tungsten (W), antimony (Sb), titanium (Ti), silver (Ag), manganese (Mn), tin (Sn), zirconium (Zr), strontium (Sr), gallium (Ga), silicon (Si), or chromium (Cr). The photoelectric conversion efficiency of the photoelectric conversion module 100 may be increased by the photosensitive dye absorbed therein. For example, the semiconductor layer 107 may be formed by coating a paste, in which semiconductor particles having diameters of about 5 nm to about 1000 nm are dispersed, on the light-receiving substrate 101 on which the first transparent conductive layer 106 is formed, and then heating or pressing the paste by applying a certain degree of heat or pressure.

The semiconductor layer 107 absorbs the photosensitive dye that is excited (or excitable) by the light VL. In other words, the dye particles are adsorbed on the surface of the semiconductor particles. The photosensitive dye absorbed in the semiconductor layer 107 absorbs the light VL incident on the semiconductor layer 107 through the light-receiving substrate 101, and electrons of the photosensitive dye are excited from a ground state to an excitation state. The excited electrons are transferred to a conduction band of the semiconductor layer 107, through an electrical contact between the photosensitive dye and the semiconductor layer 107, reach the first transparent conductive layer 106 via the semiconductor layer 107, and are output via the first transparent conductive layer 106, thereby forming a driving current for driving an external circuit.

For example, the photosensitive dye absorbed by the semiconductor layer 107 includes molecules that absorb visible light and rapidly transfer electrons to the semiconductor layer 107 in an optical excitation state. The photosensitive dye may be in the form of a liquid, a gel, or a solid. For example, the photosensitive dye absorbed in the semiconductor layer 107 may be a ruthenium (Ru)-based photosensitive dye. The photosensitive dye may be absorbed into the semiconductor layer 107 by dipping the light-receiving substrate 101 on which the semiconductor layer 107 is formed into a solution containing the photosensitive dye.

The second transparent conductive layers 108 are formed on an inner surface of the counter substrate 102. The second transparent conductive layer 108 may be formed of a material having transparency and electrical conductivity. For example, the second transparent conductive layer 108 may be a TCO layer such as an ITO layer, an FTO layer, or an ATO layer.

Although not shown in FIG. 1, a second grid pattern and a second protection layer covering the second grid pattern may further be formed on the second transparent conductive layer 108.

The counter electrode 105 functions as a positive electrode of the photoelectric conversion module 100, and performs a reduction catalyst function for providing electrons to the electrolyte layer 110. The photosensitive dye absorbed in the semiconductor layer 107 is excited by absorbing the light VL, and excited electrons are output via the first transparent conductive layer 106. Meanwhile, the photosensitive dye having lost electrons is reduced by electrons provided when the electrolyte layer 110 is oxidized, and the oxidized electrolyte layer 110 is reduced by electrons that reach the second transparent conductive layer 108 via the external circuit, thereby completing an operation of the photoelectric conversion module 100.

The catalyst layer 109 may be formed of a material having a reduction catalyst function for providing electrons to the electrolyte layer 110. For example, the catalyst layer 109 may be formed of a metal such as platinum (Pt), Au, Ag, copper (Cu) or Al, a metal oxide such as tin oxide (SnO), or a carbon (C)-based material such as graphite.

The electrolyte layer 110 may be formed of a redox electrolyte including an oxidant and reductant pair. The electrolyte layer 110 may be a solid, a gel, or a liquid.

The plurality of unit photoelectric cells 103 divided by a plurality of sealants 112 are arranged between the light-receiving substrate 101 and the counter substrate 102. In the current embodiment, each unit photoelectric cell 103 includes three unit photoelectric cells, that is, a first unit photoelectric cell 113, a second unit photoelectric cell 114, and a third unit photoelectric cell 115. However, the number of unit photoelectric cells may vary as desired according to the design of the photoelectric conversion module 100. The sealants 112 are formed on side surfaces of the first through third unit photoelectric cells 113 through 115 so as to separate (or divide) the unit photoelectric cells 103 from one another.

The electrolyte layer 110 is formed in each of the first through third unit photoelectric cells 113 through 115 separated (or divided) by the sealants 112. The sealants 112 surround the electrolyte layer 110 and seal the electrolyte layer 110 to prevent an electrolyte of the electrolyte layer 110 from leaking.

Spaces 116 are formed between the sealants 112 dividing each unit photoelectric cell 103 into the first through third unit photoelectric cells 113 through 115. Interconnection units 117 are formed in the spaces 116 so as to electrically connect the first transparent conductive layer 106 and the second transparent conductive layer 108 of the adjacent unit photoelectric cells S. The first through third unit photoelectric cells 113 through 115 are connected to one another in series by the interconnection units 117. The interconnection units 117 may be formed of a conductive material such as an Ag paste.

In one embodiment, in the photoelectric conversion module 100, the plurality of photoelectrodes 104 are arranged to be spaced apart from one another on the inner surface of the light-receiving substrate 101. The plurality of counter electrodes 105 are arranged corresponding to the photoelectrodes 104, on the inner surface of the counter substrate 102. The first transparent conductive layer 106 and the second transparent conductive layer 108 of the adjacent unit photoelectric cells S are electrically connected to each other by the interconnection units 117, thereby forming a Z-type photoelectric conversion module 100.

Meanwhile, first scribe lines 118 are formed between the first transparent conductive layers 106 and the second transparent conductive layers 108 of respective adjacent unit photoelectric cells S, so as to divide the unit photoelectric cells 103 into the first through third unit photoelectric cells 113 through 115, by using a laser scribing method.

In the above Z-type photoelectric conversion module 100, the first transparent conductive layers 106 and the second transparent conductive layers 108 of the unit photoelectric cells 103 are respectively separated by the first scribe lines 118, but the present invention is not limited thereto.

When a raw material is used to form the first and second transparent conductive layers 106 and 108, the first transparent conductive layer 106 and the second transparent conductive layer 108 may be respectively formed not only on the upper and/or lower surfaces of the light-receiving substrate 101 and the counter substrate 102, respectively, but also on side surfaces of the light-receiving substrate 101 and the counter substrate 102, respectively.

When the first and second transparent conductive layers 106 and 108 are formed on the side surfaces of the light-receiving substrate 101 and the counter substrate 102, respectively, side surfaces of the first through third unit photoelectric cells 113 through 115 separated (or divided) by the scribe lines 118 may still be electrically connected to one another through the sides of the substrate. Accordingly, and advantageously according to the invention, in order to prevent an electrical connection between the side surfaces of the first through third unit photoelectric cells 113 through 115, second scribe lines for dividing the unit photoelectric cells 103 are further formed along upper and/or lower edges of the light-receiving substrate 101 and upper and/or lower edges of the counter substrate 102, which will be described in detail below. For example, as illustrated in FIG. 1, the edges along the bottom surface of the photoelectric conversion module 100 may be referred to as upper edges of the light-receiving substrate 101 and the top surface of the photoelectric conversion module 100 may be referred to as lower edges of the counter substrate 102.

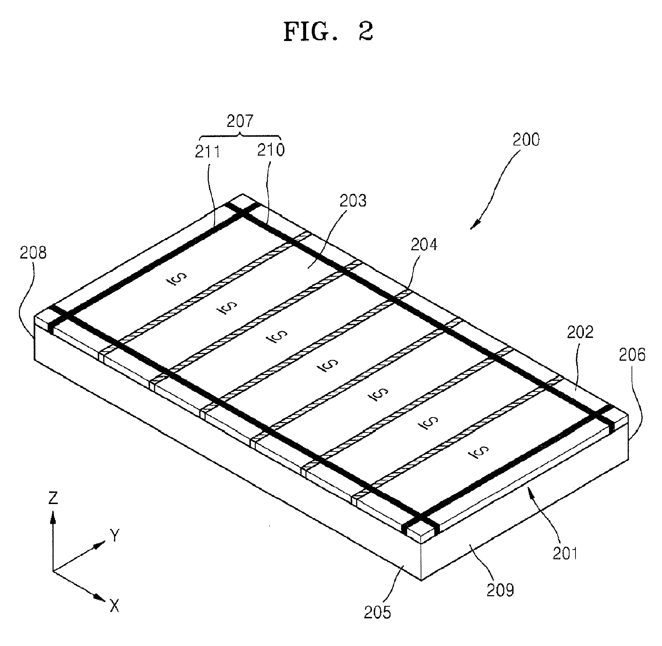

FIG. 2 illustrates a substrate module 200 of a photoelectric conversion module 100 as illustrated in FIG. 1, according to an embodiment of the present invention.

Referring to FIG. 2, the substrate module 200 includes a substrate 201 and a transparent conductive layer 202 formed on the substrate 201.

The substrate 201 may be the light-receiving substrate 101 or the counter substrate 102 of FIG. 1. The substrate 201 may be configured as a glass substrate or a resin film.

The transparent conductive layer 202 is entirely formed on a surface of the substrate 201. The transparent conductive layer 202 formed on the substrate 201 may be the first transparent conductive layer 106 or the second transparent conductive layer 108 of FIG. 1. The transparent conductive layer 202 may be a TCO layer such as an ITO layer, an FTO layer, or an ATO layer. The semiconductor layer 107 or the catalyst layer 109 of FIG. 1 may be formed on the transparent conductive layer 202, as illustrated in FIG. 1.

A plurality of first scribe lines 204 are formed on the substrate 201 by scribing the transparent conductive layer 202 so as to divide it into at least two unit photoelectric cells 203 (e.g., a plurality of unit photoelectric cells 203).

The first scribe lines 204 extend in a Y-direction on the substrate 201, that is, from one long side 205 of the substrate 201 to the other long side 206 of the substrate 201.

The first scribe lines 204 substantially correspond to a space where part of the transparent conductive layer 202 is removed in order to divide it into at least two unit photoelectric cells 203. The unit photoelectric cells 203 spaced apart from one another in an X-direction on the substrate 201 are separated from one another by the first scribe lines 204.

A plurality of second scribe lines 207 are formed on edges of the substrate 201 by additionally scribing the transparent conductive layer 202 in order to prevent at least two unit photoelectric cells 203 created (or divided) by the first scribe lines 204 from being short-circuited via side surfaces of the substrate 201.

The second scribe lines 207 include first portions 210 extending in the X-direction on the substrate 201 along the edges of the substrate 201, that is, extending from one short side 208 of the substrate 201 to the other short side 209 of the substrate 201; and second portions 211 extending in the Y-direction on the substrate along the edges of the substrate 201, that is, extending from the long side 205 of the substrate 201 to the other long side 206 of the substrate 201.

The first portions 210 of the second scribe lines 207 are formed to face each other along the long sides 205 and 206 of the substrate 201, and the second portions 211 of the scribe lines 207 are formed to face each other along the short sides 208 and 209 of the substrate 201. The first portions 210 cross (or intersect) the second portions 211 at corners of the substrate 201. The second scribe lines 207 substantially correspond to a space where part of the transparent conductive layer 202 is removed, similar to the first scribe lines 204.

Thus, the unit photoelectric cells 203 spaced apart from one another in the X-direction of the substrate 201 are separated from one another by the first and second scribe lines 204 and 207.

In the current embodiment, the second scribe lines 207 include the first and second portions 210 and 211 having a stripe shape. However, as long as the second scribe lines 207 are formed by scribing the transparent conductive layer 202 along the edges of the substrate 201, the shape of the second scribe lines 207 is not limited.

As such, since the transparent conductive layer 202 may be divided into at least two unit photoelectric cells 203 by the first scribe lines 204 and the second scribe lines 207, the unit photoelectric cells 203 may be spaced apart from one another (e.g., independently patterned) without being short-circuited.

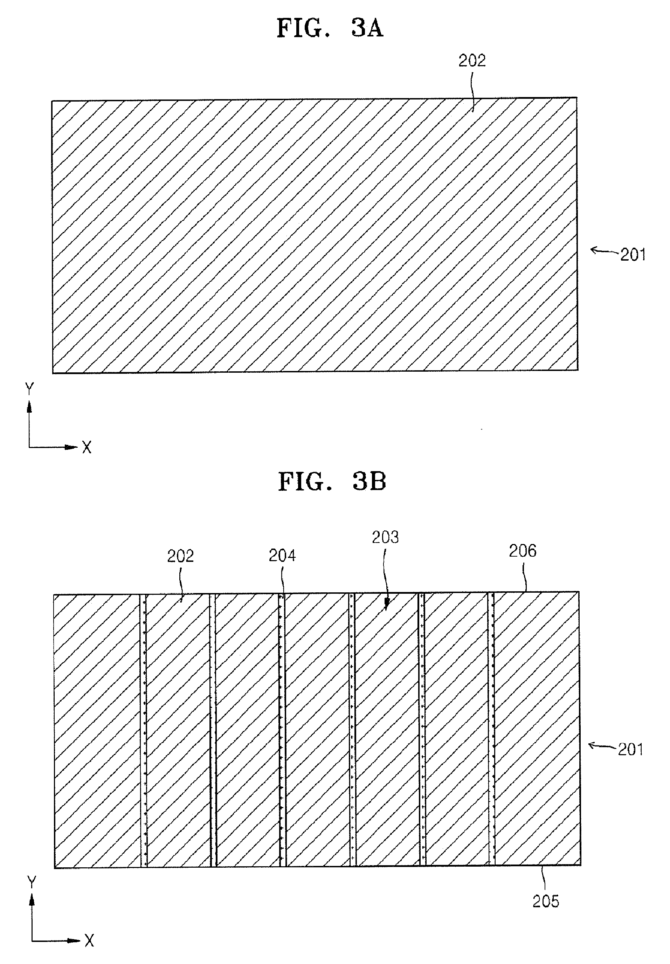

FIGS. 3A through 3D illustrate a process for manufacturing a substrate module 200 of the photoelectric conversion module having the above-described structure.

As illustrated in FIG. 3A, according to an embodiment of the present invention, the substrate 201 is prepared, and then the transparent conductive layer 202 is entirely formed on the substrate 201 by using a deposition process. The transparent conductive layer 202 may be a TCO layer such as an ITO layer, an FTO layer, or an ATO layer.

Referring to FIG. 3B, the first scribe lines 204 are formed on the substrate 201 by using a laser scribing method so as to divide it into at least two unit photoelectric cells 203. The first scribe lines 204 extend in the Y-direction on the substrate 201, that is, from one long side 205 of the substrate 201 to the other long side 206 of the substrate 201. The unit photoelectric cells 203 are spaced apart from one another at intervals (e.g., predetermined intervals) in the X-direction on the substrate 201, by the first scribe lines 204.

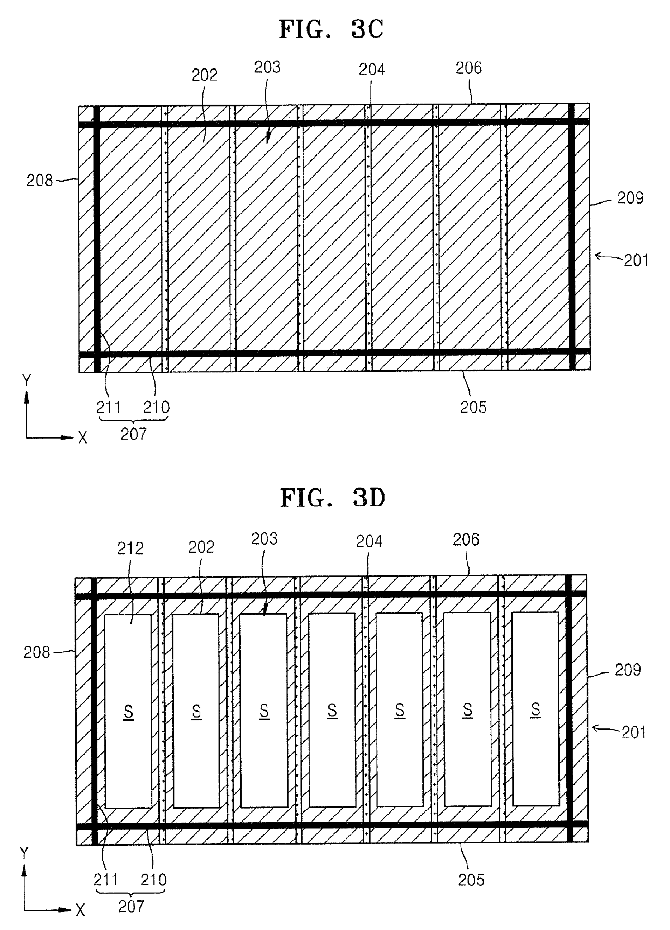

Referring to FIG. 3C, the second scribe lines 207 are formed on the edges of the substrate 201 by further (or additionally) scribing the transparent conductive layer 202.

For example, the first portions 210 of the second scribe lines 207 are formed by scribing the transparent conductive layer 202 along the edges of the substrate 201 from one short side 208 of the substrate 201 to the other short side 209 of the substrate 201, that is, in the X-direction on the substrate 201.

At the same time, the second portions 211 of the second scribe lines 207 are formed by scribing the transparent conductive layer 202 along the edges of the substrate 201 from one long side 205 of the substrate 201 to the other long side 206 of the substrate 201, that is, in the Y-direction on the substrate 201.

As such, the first portions 210 of the second scribe lines 207 are formed to face each other along the long sides 205 and 206 of the substrate 201, and the second portions 211 of the second scribe lines 207 are formed to face each other along the short sides 208 and 209 of the substrate 201.

Accordingly, the unit photoelectric cells 203 spaced apart from one another in the X-direction of the substrate 201 are separated from one another by the first and second scribe lines 204 and 207.

Referring to FIG. 3D, functional layers 212 are respectively formed in the unit photoelectric cells 203. The functional layer 212 may be a semiconductor layer or a catalyst layer. Thus, the substrate module 200 in which the transparent conductive layer 202 and the functional layer 212 are stacked is formed in each of the unit photoelectric cells 203.

As described above, according to embodiments of the present invention, since at least two unit photoelectric cells created (or divided) by first scribe lines are additionally separated (or divided) by second scribe lines formed along edges of a substrate, transparent conductive layers formed on side surfaces of the substrate are not connected to one another, and thus a short circuit may be prevented from occurring between adjacent unit photoelectric cells.
It should be understood that the exemplary embodiments described herein should be considered in a descriptive sense only and not for purposes of limitation. Descriptions of features or aspects within each embodiment should typically be considered as available for other similar features or aspects in other embodiments.

## Claims

1. A photoelectric conversion module (100) comprising:
a substrate (101, 102, 201);
a transparent conductive layer (106, 108, 202) on the substrate;
a plurality of first scribe lines (118, 204) formed on the substrate by scribing the transparent conductive layer so as to divide the transparent conductive layer into a plurality (103) of unit photoelectric cells (203); and
a plurality of second scribe lines (207) formed along edges of the substrate (201) by scribing the transparent conductive layer (202).

2. The photoelectric conversion module (100) according to claim 1, wherein the first scribe lines (118, 204) extend in a first direction (Y) on the substrate (201) from one side (205) of the substrate to another side (206) of the substrate (201) opposite the one side (205) of the substrate (201).

3. The photoelectric conversion module (100) according to claim 2, wherein the first scribe lines (204) correspond to a location where a part of the transparent conductive layer (202) is removed so that the unit photoelectric cells (203) are electrically insulated from one another at a surface of the substrate (201) in a second direction (X) perpendicular to the first direction (Y) on the substrate.

4. The photoelectric conversion module (100) according to any one of claims 1 to 3, wherein the second scribe lines (207) correspond to a location where a part of the transparent conductive layer (202) is removed.

5. The photoelectric conversion module according to claim 4, wherein the second scribe lines (207) comprise first portions (210) extending in a first direction (X) along the edges of the substrate (201) between two opposite sides (208, 209) of the substrate (201), and second portions (211) extending in a second direction (Y) along the edges of the substrate (201) between two opposite sides (205, 206) of the substrate (201), the second direction (Y) being perpendicular to the first direction (X).

6. The photoelectric conversion module according to any one of claim 1 to 5, wherein the transparent conductive layer (106, 108, 202) comprises a transparent conductive oxide (TCO) layer.

7. A photoelectric conversion module (100) comprising:
a light-receiving substrate (101) having a plurality of photoelectrodes (104), each of the photoelectrodes (104) comprising a first transparent conductive layer (106) and a semiconductor layer (107) on the first transparent conductive layer (106) to face a counter-substrate (102);
a counter substrate (102) facing the light-receiving substrate (101) and having a plurality of counter electrodes (105), each of the counter electrodes (105) comprising a second transparent conductive layer (108) and a catalyst layer (109) on the second transparent conductive layer (108) able to face the semi-conductor layer (107);
electrolyte layers (S) between the photoelectrodes (104) and the counter electrodes (105);
a sealant (112) between the light-receiving substrate (101) and the counter substrate (102) and separating at least one unit photoelectric cell (113, 114, 115) from an adjacent unit photoelectric cell (113, 114, 115) ;
a plurality of first scribe lines (118) formed on the light-receiving substrate (101) and the counter substrate (102) by scribing each of the first transparent conductive layer (106) and the second transparent conductive layer (108) so as to divide said transparent conductive layer (202) into a plurality of unit photoelectric cells (203); and
a plurality of second scribe lines (207) formed along edges of the substrates (202) by scribing each of the first transparent conductive layer (106) and the second transparent conductive layer (108).

8. The photoelectric conversion module (100) according to claim 7, wherein the first scribe lines (204) extend in a first direction (Y) on the substrates (201) from one side (205) of each of the substrates (201) to another side (200) of each of the substrates (201) opposite the one side (205) of each of the substrates (201).

9. The photoelectric conversion module (100) according to any one of claims 7 and 8, wherein the first scribe lines (204) correspond to a location where a part of the first transparent conductive layer (106) and a part of the second transparent conductive layer (108) are removed so that the unit photoelectric cells (203) are electrically insulated from one another at a surface of the substrates (201) in a second direction (Y) perpendicular to the first direction (X) on the substrates (201).

10. The photoelectric conversion module (100) according to any one of claims 7 to 9, wherein the second scribe lines (207) correspond to a location where a part of the first transparent conductive layer (106) and a part of the second transparent conductive layer (108) are removed so as to electrically insulate the unit photoelectric cells (203) from one another along the edges of the substrates (201).

11. The photoelectric conversion module (100) according to any one of claims 7 to 10, wherein the second scribe lines (207) comprise first portions (210) extending in a first direction (X) along the edges of the substrates (201) between two opposite sides (206, 209) of the substrates, and second portions (211) extending in a second direction (Y) along the edges of the substrates (201) between two opposite sides (205, 206) of the substrates (201), the second direction (Y) being perpendicular to the first direction (X).

12. The photoelectric conversion module (100) according to any one of claims 7 to 11, wherein the first transparent conductive layer (106) and the second transparent conductive layer (108) each comprise a TCO layer.

13. The photoelectric conversion module (100) according to any one of claims 7 to 12, wherein the semiconductor layer (107) comprises a metal oxide, a photosensitive dye is absorbed in the semiconductor layer, and the catalyst layer (109) comprises a material selected from the group consisting of a metal, a metal oxide, and a carbon (C)-based material.

14. A method of manufacturing a substrate module (200) of a photoelectric conversion module (100), the method comprising:
forming a transparent conductive layer (202) on a substrate (201);
forming a plurality of first scribe lines (204) on the substrate (201) by scribing the transparent conductive layer (202) so as to divide the transparent conductive layer (202) into a plurality of unit photoelectric cells (203); and
forming a plurality of second scribe lines (207) along edges of the substrate (201) by scribing the transparent conductive layer (202).

15. The method according to claim 14, wherein forming the second scribe lines (207) comprises:
scribing (210) the transparent conductive layer (202) in a first direction (X) along the edges of the substrate (201) between two opposite sides (208, 209) of the substrate (201); and
scribing (211) the transparent conductive layer (202) in a second direction (Y) along the edges of the substrate (201) between two opposite sides (205, 206) of the substrate (201), the second direction (Y) being perpendicular to the first direction (X).
